# EUROPEAN PATENT APPLICATION

(11) **EP 4 481 234 A1**
(43) Date of publication of application: **25.12.2024**
(21) Application number: 24178845.4
(22) Date of filing: 29.05.2024
(51) Int. Cl.: F16H 21/22, F16C 3/10, F16H 21/24, F16C 3/12, F02B 75/22, F02B 75/18, F04B 25/00

(54) **DRIVE DEVICE INCLUDING OSCILLATING LINEAR DRIVE MECHANISM**

(30) Priority: 31.05.2023 JP 2023090347
(71) Applicant: Nabtesco Corporation, Tokyo 102-0093 (JP); Nabtesco Automotive Corporation, Tokyo 102-0093 (JP); Z Mechanism Technology Institute Co., Ltd., Yonezawa-shi, Yamagata 992-0033 (JP)
(72) Inventor: Suda, Tomoharu, Tokyo, 102-0093 (JP); Ikeda, Makoto, Tokyo, 102-0093 (JP); Minato, Ichiro, Tokyo, 102-0093 (JP); Shimomura, Takeo, Tokyo, 102-0093 (JP); Yoshizawa, Yutaka, Yonezawa-shi, Yamagata, 992-0033 (JP)
(74) Representative: Grünecker Patent- und Rechtsanwälte PartG mbB

(57) **Abstract**

The invention relates to a drive device (10) including an oscillating linear drive mechanism (20). The drive device (10) includes a case (12), a first crankshaft (CR1), a second crankshaft (CR2), a first slider (S1), a second slider (S2), a first moving unit (P1, CN1), a first guide (30), a second guide (32), and a third guide (14a).

## Description

### TECHNICAL FIELD

The embodiments of the invention relate to a drive device including an oscillating linear drive mechanism configured to convert rotation and oscillatory motion of a rotator that rotates eccentrically into linear motion.

### BACKGROUND

A double eccentric arc oscillating mechanism is known as a mechanism for power conversion of rotational motion into linear motion. In a double eccentric arc oscillating mechanism, an eccentric shaft on one side performs linear motion by defining the radius of a double circular eccentric mechanism in a specific ratio. In such an oscillating mechanism, the crankshaft (eccentric shaft) that supports the reciprocating portion as a moving unit is supported by a cantilever structure. When the oscillation fulcrum is placed directly below the reciprocating portion, an input/output shaft can be provided on one end of the eccentric shaft. However, in the case where the oscillation fulcrum is placed directly below the reciprocating portion, when an external force acts on the reciprocating portion, the cantilevered eccentric shaft may deform and interfere with the operation of the oscillation fulcrum.

### RELEVANT REFERENCE

### LIST OF RELEVANT PATENT LITERATURE

Patent Literature 1: Publication of Japanese Patent No. 6593945
Patent Literature 2: Publication of Japanese Patent No. 6755542

### SUMMARY

The object of the embodiments of the invention is to provide a drive device capable of stable power conversion of rotational motion into linear motion and achieving a high operation efficiency.

According to an embodiment, a drive device comprises: a case; a first crankshaft including a main shaft and an eccentric shaft, the main shaft having a first central axis, the eccentric shaft having a second central axis parallel to the first central axis and being eccentric to the main shaft, both axial ends of the main shaft being supported by the case so as to be rotatable around the first central axis; a second crankshaft supported by the eccentric shaft so as to be rotatable around the second central axis, the second crankshaft including a first journal portion and a second journal portion, the first journal portion being eccentric to the second central axis in one direction, the second journal portion being eccentric to the second central axis in another direction; a first slider rotatably provided on the first journal portion; a second slider rotatably provided on the second journal portion; a first moving unit rotatably connected to the first journal portion and configured to perform linear motion in a first direction orthogonal to the first central axis as the first journal portion moves; a first guide provided on the case and configured to guide movement of the first slider along the first direction; a second guide provided on the case and configured to guide movement of the second slider along a second direction, the second direction being orthogonal to the first central axis and orthogonal to the first direction; and a third guide provided on the case and configured to guide the linear motion of the first moving unit in the first direction.

### ADVANTAGEOUS EFFECTS

The invention provides a drive device capable of stable power conversion of rotational motion into linear motion and achieving a high operation efficiency.

### BRIEF DESCRIPTION OF THE DRAWINGS

Fig. 1 is a perspective view showing an external appearance of a drive device according to a first embodiment.
Fig. 2 is a perspective view showing a drive mechanism of the drive device.
Fig. 3 is an exploded perspective view showing the drive mechanism.
Fig. 4 is a side view showing the drive mechanism.
Fig. 5 is a sectional view showing the drive device.
Fig. 6 is a side view showing the drive device viewed from one side thereof, the case of the drive device being partially taken away.
Fig. 7 is a side view showing the drive device viewed from the other side thereof, the case of the drive device being partially taken away.
Fig. 8 is a side view showing a drive mechanism of a drive device according to a first variation.
Fig. 9 is a side view showing a drive mechanism of a drive device according to a second variation.
Fig. 10 is a side view showing a drive mechanism of a drive device according to a third variation.
Fig. 11 is a side view showing a drive mechanism of a drive device according to a fourth variation.
Fig. 12 is a perspective view showing a drive mechanism of a drive device according to a second embodiment.
Fig. 13 is a perspective view showing a drive mechanism of a drive device according to a third embodiment.
Fig. 14 is a perspective view showing a drive mechanism of a drive device according to a fourth embodiment.
Fig. 15 is a perspective view showing a drive mechanism of a drive device according to a fifth embodiment.
Fig. 16 is a perspective view showing a drive mechanism of a drive device according to a sixth embodiment.
Fig. 17 is a perspective view showing the drive mechanism of the drive device according to the sixth embodiment.
Fig. 18 is a side view showing the drive device according to the sixth embodiment viewed from one side thereof, the case 12 of the drive device being partially taken away.
Fig. 19 is a side view showing the drive device according to the sixth embodiment viewed from the other side thereof, the case 12 of the drive device being partially taken away.

### DESCRIPTION OF THE PREFERRED EMBODIMENTS

Embodiments of the present invention will be hereinafter described with reference to the drawings. The disclosure is only an example of the invention. Any modification that can be easily devised by a person skilled in the art within the purport of the invention is naturally encompassed in the scope of the invention. In addition, the drawings may be represented schematically in terms of width, thickness, shape or the like of each part compared to the actual aspects in order to make clearer explanation, but this is only to present an example and does not limit the understanding of the invention. In this specification and the drawings, the same elements as described previously for foregoing figures are denoted by the same signs and may not be described again.

### <First Embodiment>

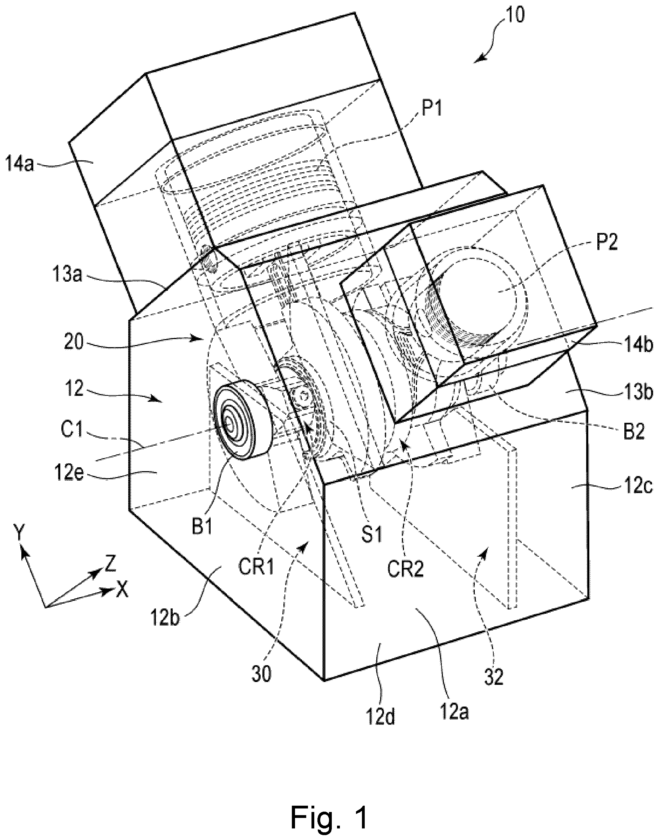

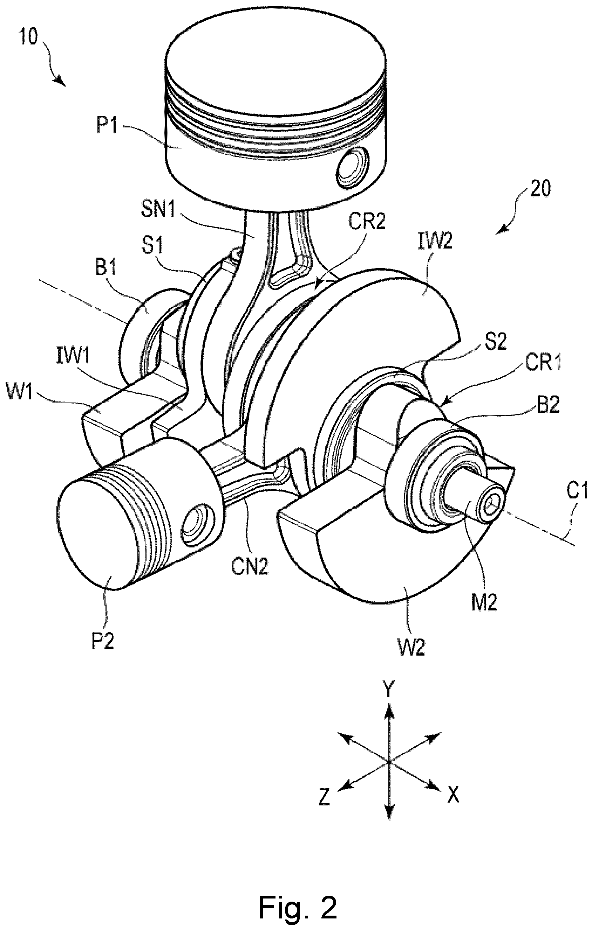

Fig. 1 is a perspective view schematically showing an external appearance of a drive device according to a first embodiment. Fig. 2 is a perspective view showing a drive mechanism of the drive device. In this embodiment, the drive device 10 is configured as a two-cylinder compressor or generator, for example. As shown in Fig. 1, the drive device 10 includes a case (crank case) 12, a first cylinder 14a, a second cylinder 14b, and a two-axis oscillating linear drive mechanism (hereinafter referred to as the drive mechanism) 20. The case 12 has an approximately rectangular box shape. The first cylinder 14a and the second cylinder 14b are provided on the case 12. The drive mechanism 20 is located in the case 12, in the first cylinder 14a, and in the second cylinder 14b. In one example, the case 12 has a bottom wall 12a, a first side wall 12b, a second side wall 12c, a third side wall 12d, a fourth side wall 12e, a first ceiling wall 13a, and a second ceiling wall 13b. The bottom wall 12a is rectangular in shape. The first side wall 12b and the second side wall 12c are erected along the two sides forming the bottom wall 12a. The first side wall 12b and the second side wall 12c are approximately pentagonal in shape. The third side wall 12d and the fourth side wall 12e are erected along two opposing sides forming the bottom wall 12a. The first ceiling wall 13a and the second ceiling wall 13b connect to the top edges of the first to fourth side walls. The first ceiling wall 13a and the second ceiling wall 13b are inclined with respect to the bottom wall 12a and are opposed to each other at an angle of approximately 90 degrees.

The first cylinder 14a, which serves as a third guide, is installed on the first ceiling wall 13a. The first cylinder 14a extends in a direction orthogonal to the first ceiling wall 13a (Y direction). The second cylinder 14b, which serves as a fourth guide, is installed on the second ceiling wall 13b. The second cylinder 14b extends in a direction orthogonal to the second ceiling wall 13b (Z direction). The Y direction and the Z direction are orthogonal to each other, and the first cylinder 14a and the second cylinder 14b are located at an angle of approximately 90 degrees.

A first guide 30 and a second guide 32 are provided in the case 12. The first guide 30 and the second guide 32 are fixed to the inner surface of the case 12. As will be described later, the first guide 30 and the second guide 32 guide the linear motion of sliders of the drive mechanism 20.

The drive mechanism 20 includes a first crankshaft (inner crankshaft) CR1, a second crankshaft (outer crankshaft) CR2, first and second sliders S1 and S2 attached to the second crankshaft CR2, and first and second pistons P1 and P2 connected to the second crankshaft CR2. The first crankshaft CR1 includes a pair of main shafts each extending along the first central axis C1. These main shafts are rotatably supported by bearings B1 and B2 provided in the first and second side walls 12b and 12c of the case 12. Thus, the first crankshaft CR1 is supported at both ends thereof by the case 12 with the first central axis C1 coinciding with the X direction. The X direction is orthogonal to the Y direction and the Z direction and is parallel to the bottom wall 12a of the case 12. The first piston P1 is located in the first cylinder 14a. The first piston P1 moves linearly up and down in the Y direction. The second piston P2 is located in the second cylinder 14b. The second piston P2 moves linearly up and down in the Z direction. The first slider S1 attached to the second crankshaft CR2 is guided by the first guide 30 to move linearly in the Y direction. The second slider attached to the second crankshaft CR2 is guided by the second guide 32 to move linearly in the Z direction.

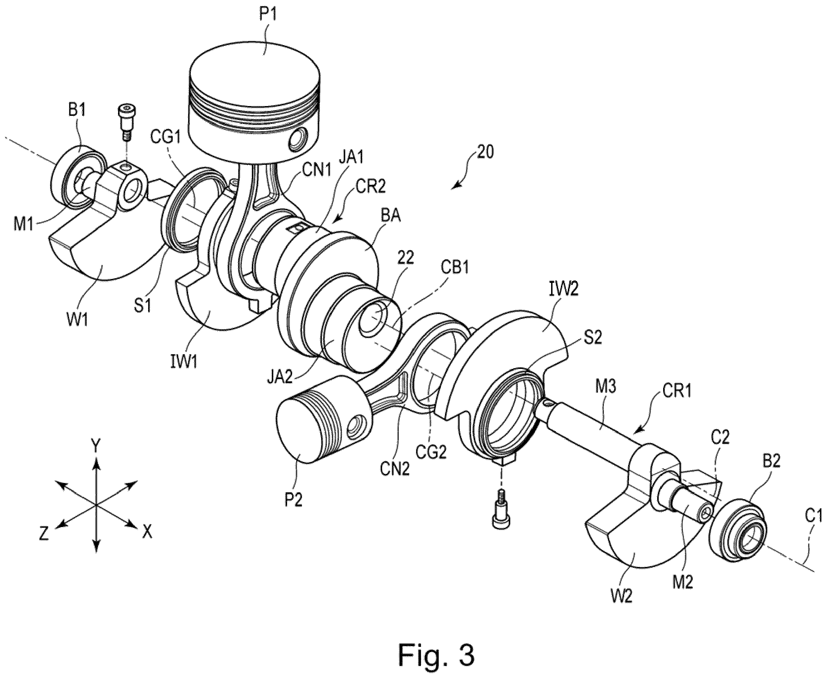

A description will now be given of the configuration of the drive mechanism 20. Fig. 2 is a perspective view showing the drive mechanism. Fig. 3 is an exploded perspective view showing the drive mechanism. As shown in Fig. 2, the drive mechanism 20 includes the first crankshaft (inner crankshaft) CR1 and the second crankshaft (outer crankshaft) CR2. The second crankshaft CR2 is rotatably supported by the first crankshaft CR1. The first crankshaft CR1 includes a pair of main shafts M1 and M2 having the first central axis C1 and also includes an eccentric shaft M3 having a second central axis C2. The pair of main shafts M1 and M2 are separated from each other in the axial direction by a predetermined distance. One main shaft M1 is connected to one end (first end) of the eccentric shaft M3 via a first counterweight W1. The other main shaft M2 is connected to the other end (second end) of the eccentric shaft M3 via a second counterweight W2. The second central axis C2 of the eccentric shaft M3 extends in parallel with the first central axis C1 and is spaced apart (eccentric) from the first central axis C1 by a predetermined distance. In this embodiment, the main shaft M2, the second counterweight W2, and the eccentric shaft M3 are integrated together. The main shaft M1 and the first counterweight W1 are integrated together. The other end of the eccentric shaft M3 is detachably connected to the first counterweight W1.

The main shaft M1 is rotatably supported on the case 12 by a bearing (e.g., ball bearing) B1. The main shaft M2 is rotatably supported on the case 12 by a bearing (e.g., ball bearing) B2. At least one of the main shafts, e.g., the main shaft M2, projects outward through the case 12 and constitutes an input/output shaft. It is also possible that the other main shaft M1 is used as the input/output shaft.

As shown in Fig. 3, the second crankshaft CR2 includes a first journal portion JA1 having a cylindrical shape, a second journal portion JA2 having a cylindrical shape, and a base portion BA having a disc-like shape. The base portion BA is located between the first journal portion JA1 and the second journal portion JA2. The base portion BA has a central axis CB1. The first journal portion JA1 is formed to have a smaller diameter than the base portion BA. Furthermore, the first journal portion JA1 is eccentrically located with respect to the central axis CB1 of the base portion BA. The second journal portion JA2 is formed to have a smaller diameter than the base portion BA. Furthermore, the second journal portion JA2 is eccentrically located with respect to the central axis CB1 of the base portion BA in the opposite direction to the first journal portion JA1. The first journal portion JA1 has a central axis CG1. The central axis CG1 is parallel to the central axis CB1 of the base portion BA and spaced apart from the central axis CB1 by a predetermined distance in the radial direction. The second journal portion JA2 has a central axis CG2. The central axis CG2 is parallel to the central axis CB1 of the base portion BA and spaced apart from the central axis CB1 by a predetermined distance in the direction 180 degrees opposite to the central axis CG1. The second crankshaft CR2 has a through hole 22 extending through the first journal portion JA1, the base portion BA, and the second journal portion JA2. The through hole 22 extends coaxially with the central axis CB1 of the base portion BA and is open at the end surfaces of the first journal portion JA1 and the second journal portion JA2.

The drive mechanism 20 further includes the first piston P1, the second piston P2, the first slider S1, the second slider S2, a first internal counterweight IW1, and a second internal counterweight IW2. The first slider S1 and the first internal counterweight IW1 are attached to the first journal portion JA1 of the second crankshaft CR2. The first piston P1 is connected to the first journal portion JA1 via a connecting rod CN1. The second slider S2 and the second internal counterweight IW2 are attached to the second journal portion JA2 of the second crankshaft CR2. The second piston P2 is connected to the second journal portion JA2 via a connecting rod CN2. In this embodiment, the first piston P1 has a larger diameter than the second piston P2. The first piston P1 and the connecting rod CN1 constitute a first moving unit. The second piston P2 and the connecting rod CN2 constitute a second moving unit.

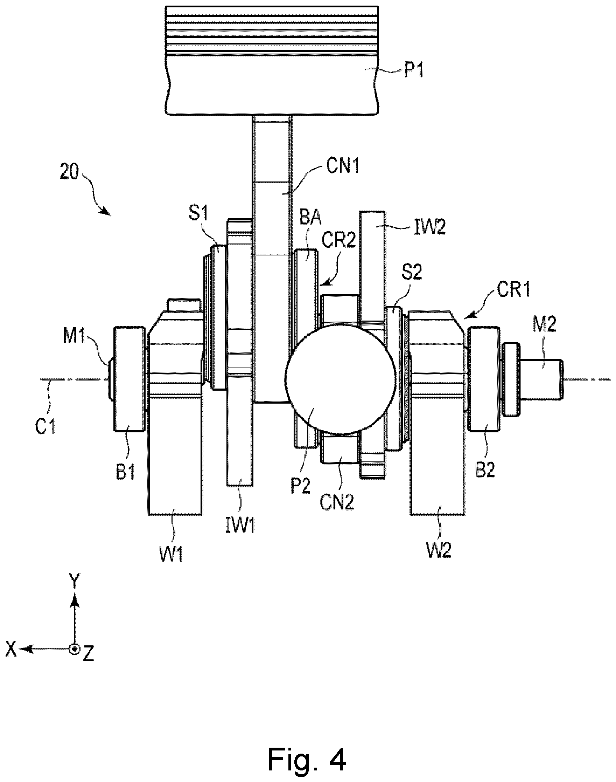

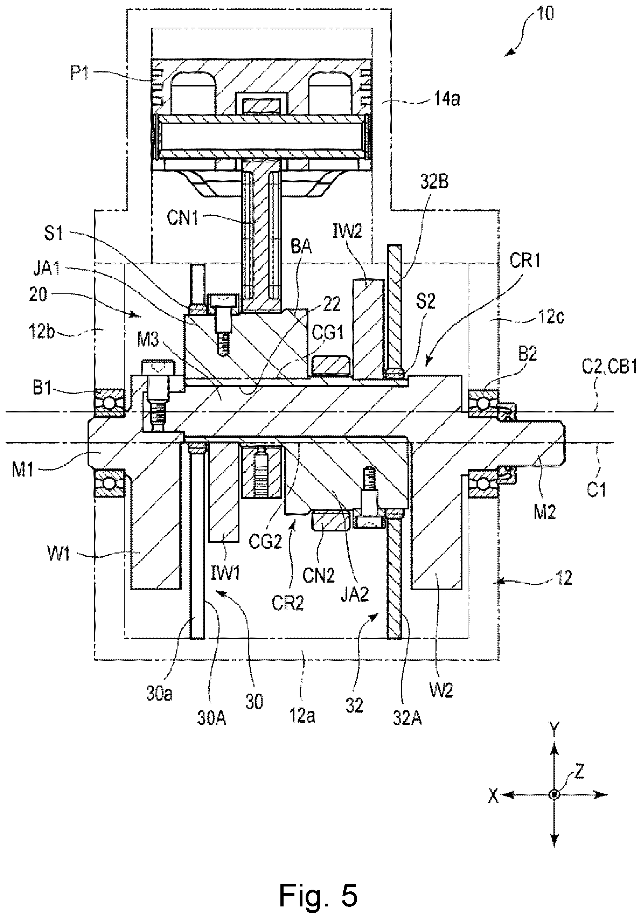

Fig. 4 is a side view showing the drive mechanism 20. Fig. 5 is a sectional view showing the drive device including the drive mechanism 20. As shown in Fig. 4, the main shafts M1 and M2 of the first crankshaft CR1 are supported on the side walls 12b and 12c of the case 12 via the bearings B1 and B2 so as to be rotatable around the first central axis C1. The first central axis C1 extends substantially parallel to the bottom wall 12a of the case 12. The eccentric shaft M3 of the first crankshaft CR1 is inserted through the through hole 22 of the second crankshaft CR2. The second crankshaft CR2 is supported by the eccentric shaft M3 so as to be rotatable around the central axis C2. As the first crankshaft CR1 rotates around the first central axis C1, the second crankshaft CR2 revolves around the first central axis line C1. Furthermore, as the second crankshaft CR2 rotates around the second central axis C2, the first journal portion JA1 revolves around the second central axis C2, and the second journal portion JA2 revolves around the second central axis C2. As a result, the first journal portion JA1 moves linearly in the Y direction, and the second journal portion JA2 moves linearly in the Z direction. Thus, each of the first and second journal portions JA1 and JA2 constitutes an oscillation fulcrum for converting rotational motion into linear motion.

One end (first end) of the connecting rod CN1 is rotatably connected to the first piston P1 via a piston pin. The other end (second end) of the connecting rod CN1 is rotatably connected to the outer peripheral surface of the first journal portion JA1. Thus, the first piston P1 is connected to the second crankshaft CR2 via the connecting rod CN1. The first piston P1 and the connecting rod CN1 move linearly in the Y direction in conjunction with the linear motion of the first journal portion JA1. At that time, the first cylinder 14a functions as a guide for guiding the linear movement of the first piston P1 in the Y direction. The first internal counterweight IW1 is connected to the outer peripheral surface of the first journal portion JA1 and extends radially outward from the first journal portion JA1. In one example, the first slider S1 has an annular shape. The first slider is attached to the outer peripheral surface of the first journal portion JA1 via a bearing. The first slider is attached so as to be rotatable around the central axis CG1 of the first journal portion JA1. In this embodiment, the first journal portion JA1 has the connecting rod CN1, the first internal counterweight IW1, and the first slider S1 arranged thereon in this order from the base portion BA.

One end (first end) of the connecting rod CN2 is rotatably connected to the second piston P2 via a piston pin. The other end (second end) of the connecting rod CN2 is rotatably connected to the outer peripheral surface of the second journal portion JA2 of the second crankshaft CR2. Thus, the second piston P2 is connected to the second crankshaft CR2 via the connecting rod CN2. The second piston P2 and the connecting rod CN2 move linearly in the Z direction in conjunction with the linear motion of the second journal portion JA2. At that time, the second cylinder 14b functions as a guide for guiding the linear movement of the second piston P2 in the Z direction. The second internal counterweight IW2 is connected to the outer peripheral surface of the second journal portion JA2. The second internal counterweight IW2 extends from the second journal portion JA2 in the opposite radial direction than the first internal counterweight IW1. In one example, the second slider S2 has an annular shape and is attached to the outer peripheral surface of the second journal portion JA2 via a bearing. The second slider S2 is attached so as to be rotatable around the central axis CG2 of the second journal portion JA2. In this embodiment, the second journal portion JA2 has the connecting rod CN2, the second internal counterweight IW2, and the second slider S2 arranged thereon in this order from the base portion BA.

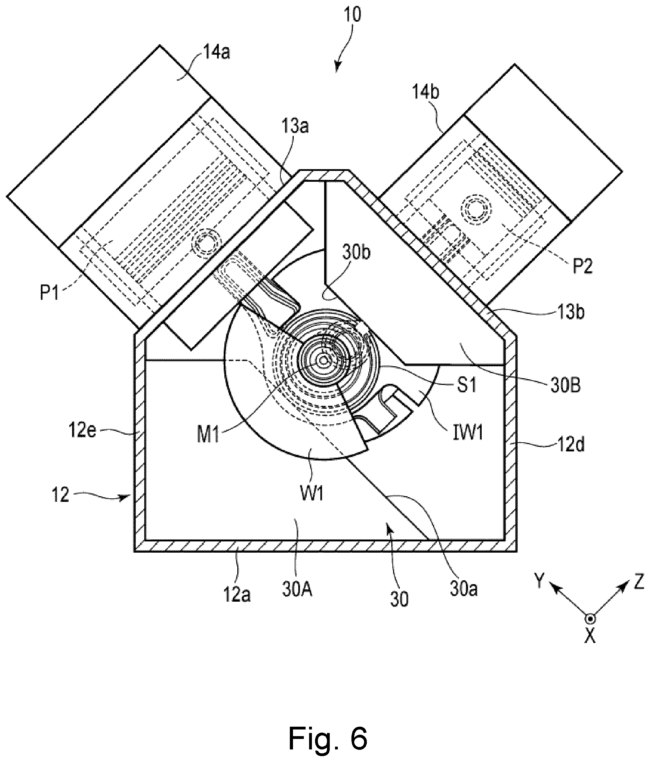

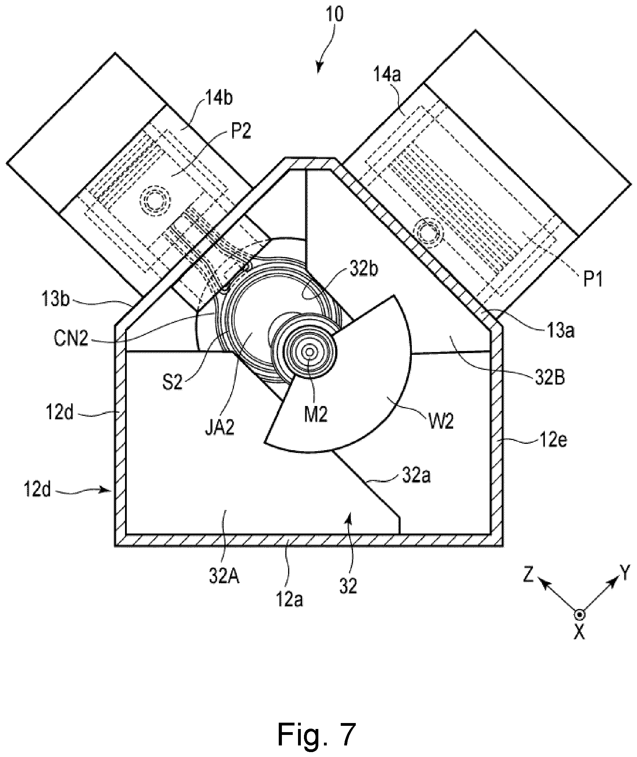

Fig. 6 is a side view showing the drive device viewed from one side thereof, the case 12 of the drive device being partially taken away. Fig. 7 is a side view showing the drive device viewed from the other side thereof, the case 12 of the drive device being partially taken away. As shown in Figs. 6 and 7, the first guide 30 guides the linear motion of the first journal portion JA1 as the oscillation fulcrum and the first slider S1. The first guide 30 includes, for example, a pair of guide plates 30A and 30B. The guide plate 30A is erected substantially vertically on the bottom wall 12a and the side wall 12e of the case 12. The guide plate 30A has a guide surface 30a constituted by the side edge extending linearly in the Y direction. The guide plate 30B is erected substantially vertically on the second ceiling wall 13b and the third side wall 12d of the case 12. The guide plate 30B has a guide surface 30b constituted by the side edge extending linearly in the Y direction. The guide surface 30b is parallel and opposed to the guide surface 30a at an interval approximately equal to the diameter of the first slider S1.

The guide plates 30A and 30B are provided at the same position as the first slider S1 in the X direction. The first slider S1 is sandwiched between the guide surfaces 30a and 30b, and the outer peripheral surface of the first slider S1 is in contact with the guide surfaces 30a and 30b. Thus, during the linear motion of the first slider S1 in the Y direction, the first slider S1 is guided in the Y direction by the guide surfaces 30a and 30b.

As shown in Figs. 6 and 7, the second guide 32 guides the linear motion of the second journal portion JA2 as the oscillation fulcrum and the second slider S2. The second guide 32 includes, for example, a pair of guide plates 32A and 32B. The guide plate 32A is erected substantially vertically on the bottom wall 12a and the side wall 12d of the case 12. The guide plate 32A has a guide surface 32a constituted by the side edge extending linearly in the Z direction. The guide plate 32B is erected substantially vertically on the first ceiling wall 13a and the fourth side wall 12e of the case 12. The guide plate 32B has a guide surface 32b constituted by the side edge extending linearly in the Z direction. The guide surface 32b is parallel and opposed to the guide surface 32a at an interval approximately equal to the diameter of the second slider S2. The guide plates 32A and 32B are provided at the same position as the second slider S2 in the X direction. The second slider S2 is sandwiched between the guide surfaces 32a and 32b, and the outer peripheral surface of the second slider S2 is in contact with the guide surfaces 32a and 32b. Thus, during the linear motion of the second slider S2 in the Z direction, the second slider S2 is guided in the Z direction by the guide surfaces 32a and 32b.

A description is given of operation of the drive device 10 configured as described above. For example, when the drive device 10 is used as a compressor, rotational force is input to the main shaft M2, and the first crankshaft CR1 is rotated around the first central axis C1. Accordingly, the second crankshaft CR2 revolves around the first central axis C1 and rotates around the second central axis C2. Furthermore, the first journal portion JA1 of the second crankshaft CR2 revolves around the second central axis C2, and the second journal portion JA2 revolves around the second central axis C2.

Thus, the first journal portion JA1 and the first slider S1, the first internal counterweight IW1, the connecting rod CN1, and the first piston P1 attached to the first journal portion JA1 move linearly in the Y direction. The linear motion of the first journal portion JA1 and the first slider S1 is guided linearly by the first guide 30. Furthermore, the linear motion of the first piston P1 is guided by the first cylinder 14a. As the first piston P1 moves up and down in the first cylinder 14a, the gas (air, refrigerant, etc.) in the first cylinder 14a is compressed and pressurized, and supplied to the outside through a discharge port (not shown).

The second journal portion JA2 of the second crankshaft CR2 and the second slider S2, the second internal counterweight IW2, the connecting rod CN2, and the second piston P2 attached to the second journal portion JA2 move linearly in the Z direction. The linear motion of the second journal portion JA2 and the second slider S2 is guided linearly by the second guide 32. Furthermore, the linear motion of the second piston P2 is guided by the second cylinder 14b. As the second piston P2 moves up and down in the second cylinder 14b, the gas (air, refrigerant, etc.) in the second cylinder 14b is compressed and pressurized, and supplied to the outside through a discharge port (not shown).

When the first piston P1 and the second piston P2 have different diameters, as in this embodiment, what is called a two-stage compressor can be realized. Specifically, the first-stage compression is performed using the first piston P1 with a larger diameter for pressurization to substantially the desired pressure, before the second-stage compression is performed using the second piston P2 with a smaller diameter to adjust the pressure.

In the drive device 10 according to the first embodiment configured as described above, the first crankshaft CR1 of the two-axis oscillating linear drive mechanism 20 is rotatably supported at both ends thereof. This provides stable support for the second crankshaft CR2 constituting the oscillation fulcrum, and prevents the occurrence of defects in the oscillation fulcrum. At the same time, both ends of the first crankshaft CR1, or the main shafts M1 and M2, can be used as the input/output shaft. Furthermore, since the first and second journal portions JA1 and JA2, each constituting the oscillation fulcrum, are guided by the guides 30 and 32 provided on the case 12, the oscillation fulcrums can perform stable and smooth linear motion. In addition, even when a reciprocating unit (piston) is placed directly below the oscillation fulcrum, the smooth linear motion of the oscillation fulcrum is not disturbed. These result in a highly efficient and low-vibration drive device.

The drive device 10 is not limited to a compressor, but may be applied to generators, engines and the like. In this case, a valve mechanism, fuel supply device, ignition device, and exhaust mechanism are installed in the cylinder heads of the first cylinder 14a and the second cylinder 14b. In this structure, fuel is supplied and ignited, combusted, and exhausted in the first and second cylinders 14a and 14b to drive the first and second pistons P1 and P2 in the Y and Z directions, respectively, to rotate the first crankshaft CR1.

Next, a description is given of a drive device according to a variation or another embodiment. In the following description of the variation or the other embodiment, the same elements as in the first embodiment described above are denoted by the same reference signs, and detailed descriptions thereof will be omitted or simplified to focus on the differences from the first embodiment.

### <First Variation>

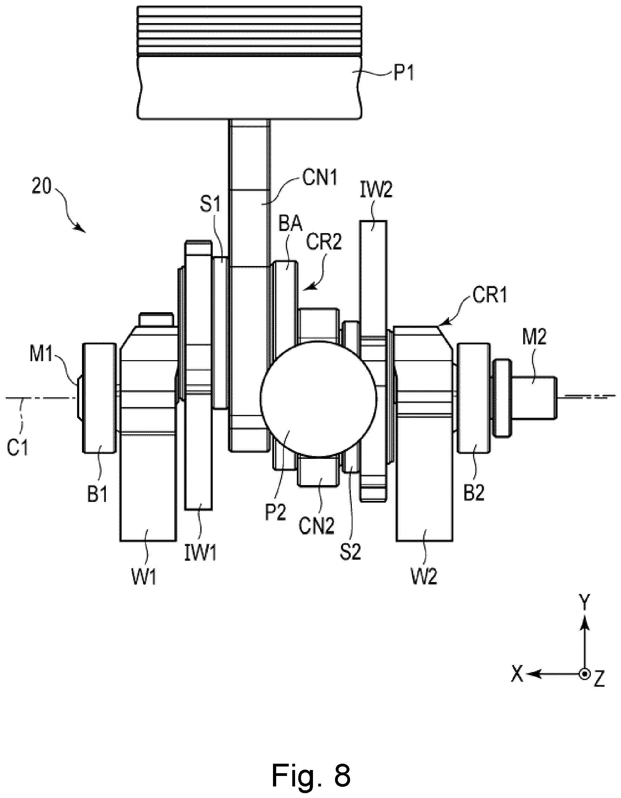

Fig. 8 is a side view showing a drive mechanism of a drive device according to a first variation. According to the first variation, the order of arrangement of the piston, slider, and counterweight in the X direction is different than in the first embodiment described above. As shown in Fig. 8, according to the first variation, the first journal portion JA1 has the connecting rod CN1, the first slider S1, and the first internal counterweight IW1 arranged thereon in this order from the base portion BA in the X direction. The second journal portion JA2 has the connecting rod CN2, the second slider S2, and the second internal counterweight IW2 arranged thereon in this order from the base portion BA.

### <Second Variation>

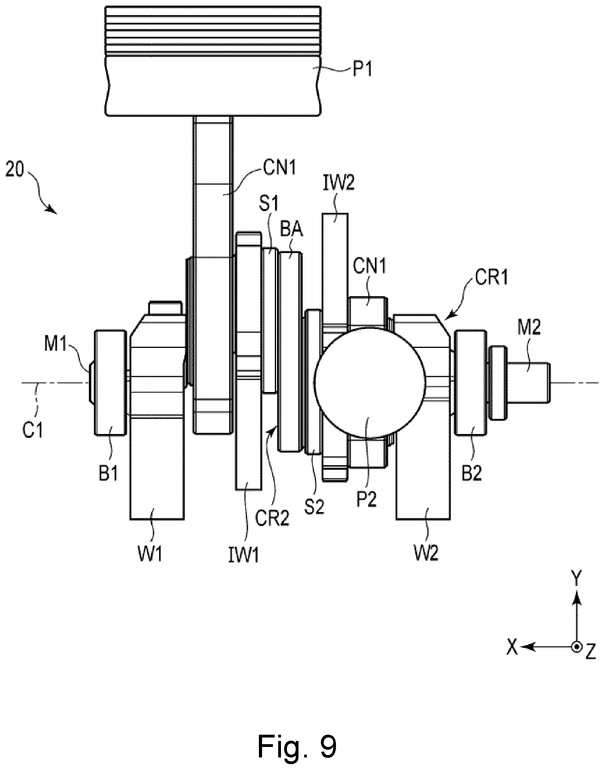

Fig. 9 is a side view showing a drive mechanism of a drive device according to a second variation. As shown in Fig. 9, according to the second variation, the first journal portion JA1 has the first slider S1, the first internal counterweight IW1, and the connecting rod CN1 arranged thereon in this order from the base portion BA in the X direction. The second journal portion JA2 has the second slider S2, the second internal counterweight IW2, and the connecting rod CN2 arranged thereon in this order from the base portion BA.

### <Third Variation>

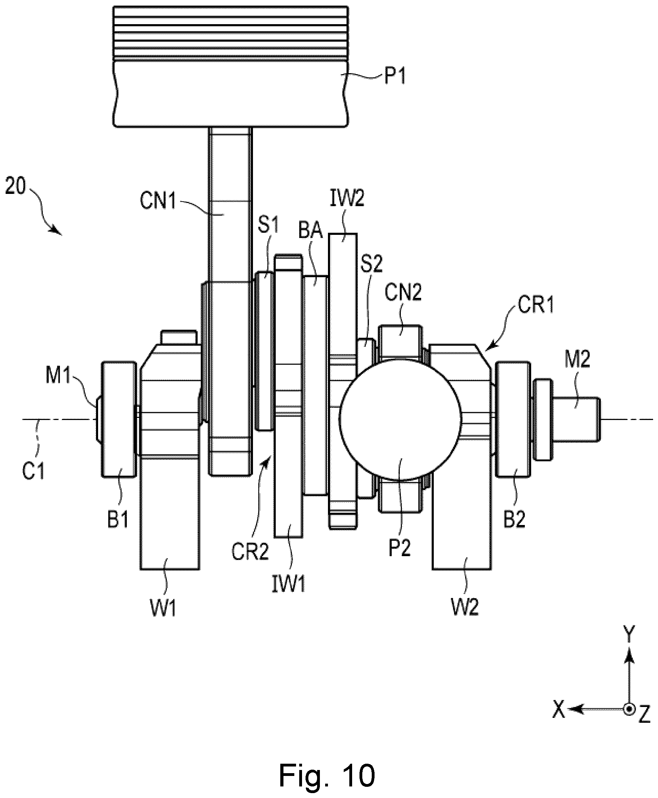

Fig. 10 is a side view showing a drive mechanism of a drive device according to a third variation. As shown in Fig. 10, according to the third variation, the first journal portion JA1 has the first internal counterweight IW1, the first slider S1, and the connecting rod CN1 arranged thereon in this order from the base portion BA in the X direction. The second journal portion JA2 has the second internal counterweight IW2, the second slider S2, and the connecting rod CN2 arranged thereon in this order from the base portion BA.

### <Fourth Variation>

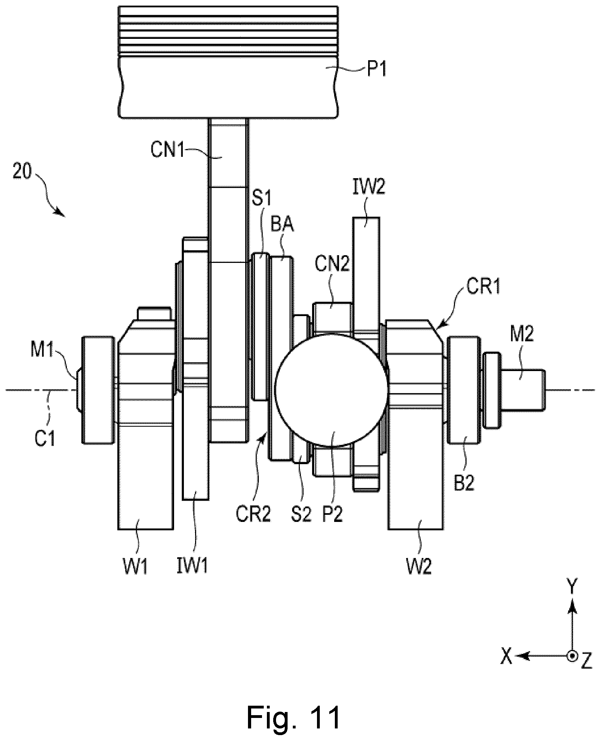

Fig. 11 is a side view showing a drive mechanism of a drive device according to a fourth variation. As shown in Fig. 11, according to the fourth variation, the first journal portion JA1 has the first slider S1, the connecting rod CN1, and the first internal counterweight IW1 arranged thereon in this order from the base portion BA in the X direction. The second journal portion JA2 has the second slider S2, the connecting rod CN2, and the second internal counterweight IW2 arranged thereon in this order from the base portion BA. In the first to fourth variations above, other components in the drive mechanism are the same as those in the drive mechanism according to the first embodiment described above. However, the positions of the first and second cylinders are adjusted according to the positions of the first and second pistons P1 and P2. The first to fourth variations can produce the same effects as the first embodiment.

In the first embodiment, the drive device 10 has two cylinders, but this configuration is not limitative. It is also possible that the drive device 10 has a single cylinder or three or more cylinders.

### <Second Embodiment>

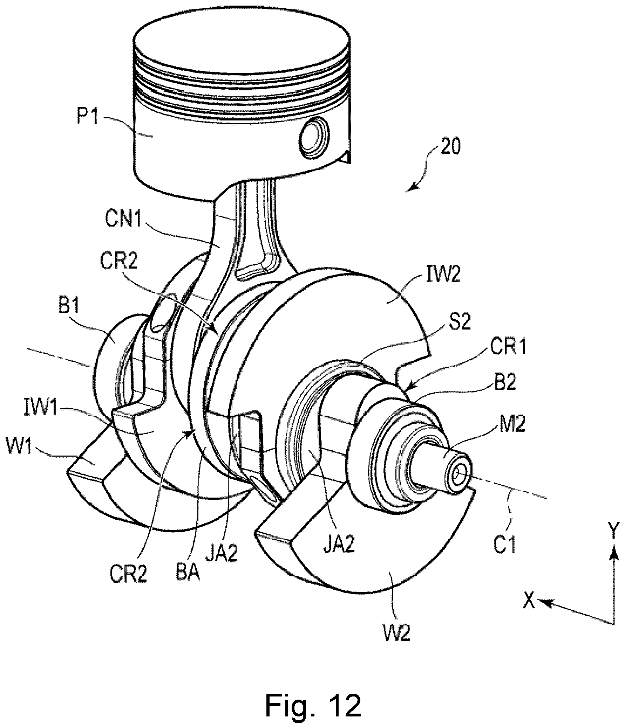

Fig. 12 is a perspective view showing a drive mechanism of a drive device according to a second embodiment. As shown in Fig. 12, according to the second embodiment, the drive mechanism 20 of the drive device 10 has a single-cylinder configuration with only the first piston P1, for example. The first piston P1 is connected to the first journal portion JA1 (see Fig. 5) of the second crankshaft CR2 via the connecting rod CN1. The first slider S1 and the first internal counterweight IW1 are attached to the first journal portion JA1. The second slider S2 and the second internal counterweight IW2 are attached to the second journal portion JA2 of the second crankshaft CR2. In this configuration, both the first journal portion JA1 and the second journal portion JA2, each constituting an oscillation fulcrum, are guided for linear motion by the guide. Therefore, even in the case where the drive mechanism 20 has a single cylinder, the load acting on the piston is small, and stable ultra-low vibration operation can be achieved. At the same time, the single-cylinder configuration makes it possible to reduce the size of the drive device 10.

### <Third Embodiment>

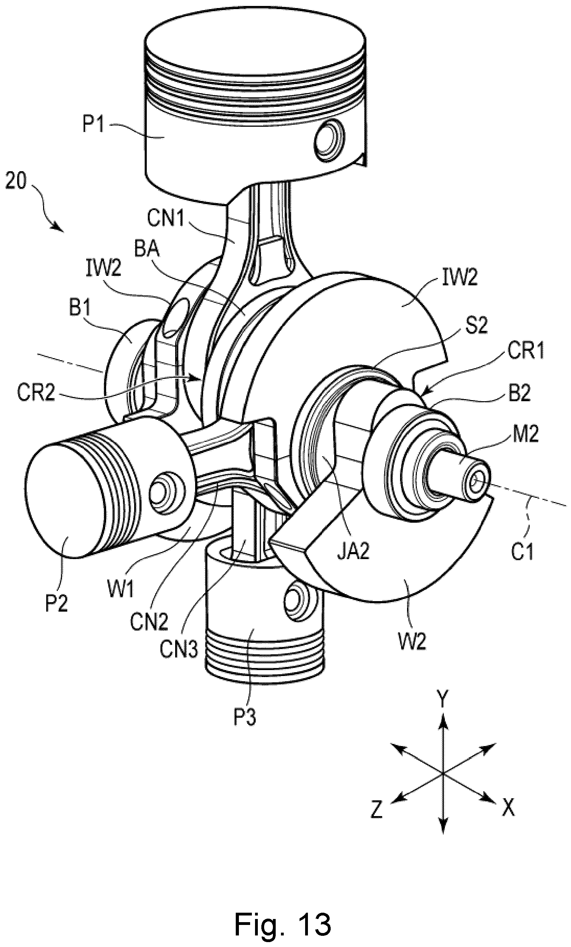

Fig. 13 is a perspective view showing a drive mechanism of a drive device according to a third embodiment. As shown in Fig. 13, according to the third embodiment, the drive mechanism 20 of the drive device 10 has a three-cylinder configuration additionally including the third piston P3. The third piston P3 is connected to the first journal portion JA1 (see Fig. 5) of the second crankshaft CR2 via the connecting rod CN3. The base end of the connecting rod CN3 is the same as, or integrated with, the base end of the connecting rod CN1. As the first journal portion JA1 performs the linear motion, the first piston P1 and the third piston P3, which are integrated together, are moved linearly in the Y direction. In one example, the third piston P3 has a diameter smaller than that of the first piston P1 and equal to that of the second piston P2.

### <Fourth Embodiment>

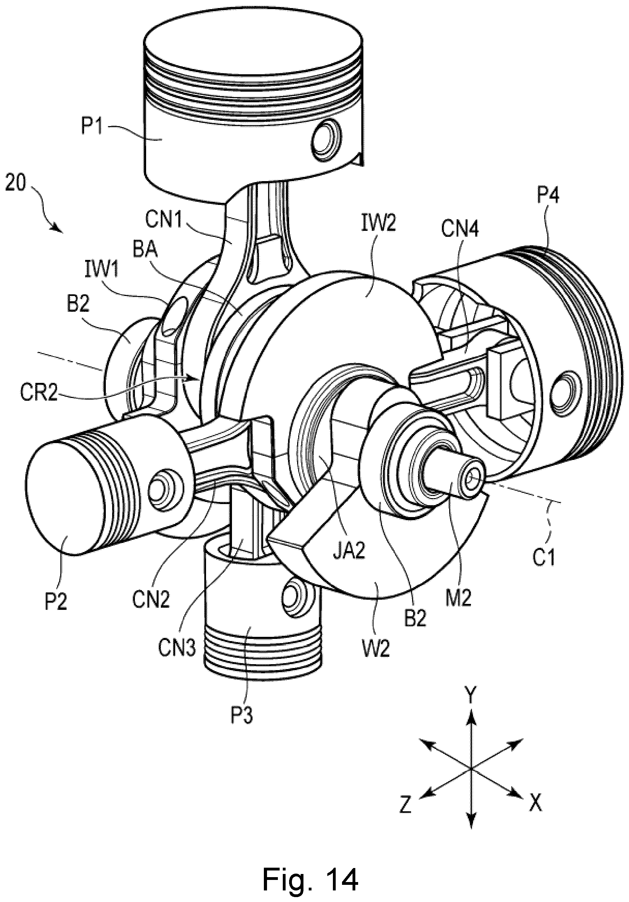

Fig. 14 is a perspective view showing a drive mechanism of a drive device according to a fourth embodiment. As shown in Fig. 14, according to the fourth embodiment, the drive mechanism 20 of the drive device 10 has a four-cylinder configuration additionally including the fourth piston P4. The fourth piston P4 is connected to the second journal portion JA2 of the second crankshaft CR2 via the connecting rod CN4. The base end of the connecting rod CN4 is the same as, or integrated with, the base end of the connecting rod CN2. As the second journal portion JA2 performs the linear motion, the second piston P2 and the fourth piston P4, which are integrated together, are moved linearly in the Z direction. In one example, the fourth piston P4 has a diameter larger than that of the second piston P2 and equal to that of the first piston P1 .

### <Fifth Embodiment>

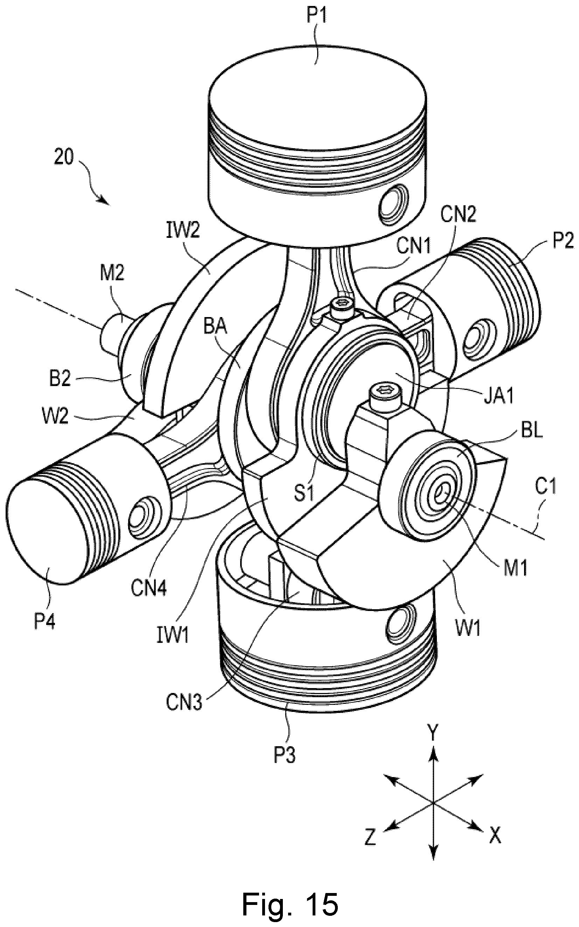

Fig. 15 is a perspective view showing a drive mechanism of a drive device according to a fifth embodiment. Fig. 15 is a perspective view showing the drive mechanism 20 viewed from the opposite direction than in Fig. 14. As shown in Fig. 15, according to the fifth embodiment, the drive mechanism 20 of the drive device 10 has a four-cylinder configuration, as in the fourth embodiment. In this embodiment, the third piston P3 has a diameter larger than that of the second piston P2 and equal to that of the first piston P1. The fourth piston P4 has a diameter smaller than that of the first piston P1 and equal to that of the second piston P2. In other words, the first piston P1 and the third piston P3 having a larger diameter are connected to each other via the connecting rods CN1 and CN3 that are integrated together, and the first piston P1 and the third piston P3 are moved linearly up and down in the Y direction. The second piston P2 and the fourth piston P4 having a smaller diameter are connected to each other via the connecting rods CN2 and CN4 that are integrated together, and the second piston P2 and the fourth piston P4 are moved linearly up and down in the Z direction.

In the third to fifth embodiments described above, other components in the drive mechanism 20 are the same as those in the drive mechanism 20 according to the first embodiment. The drive devices having the three-cylinder or four-cylinder configuration according to the third to fifth embodiments can produce the same effects as the drive device according to the first embodiment described above.

### <Sixth Embodiment>

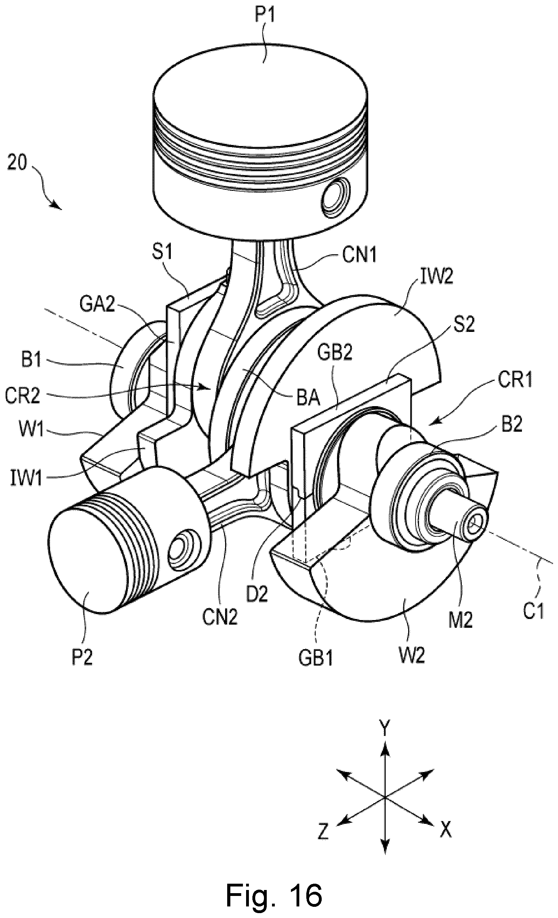

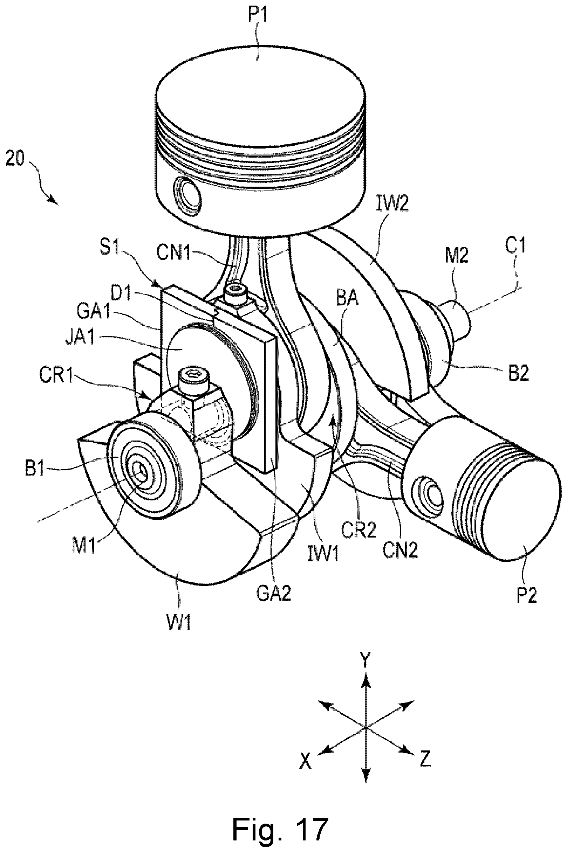

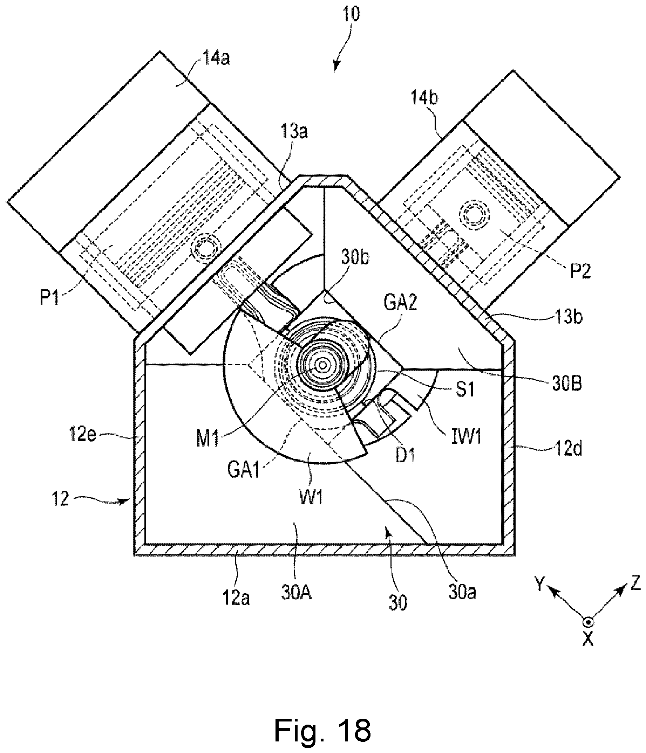

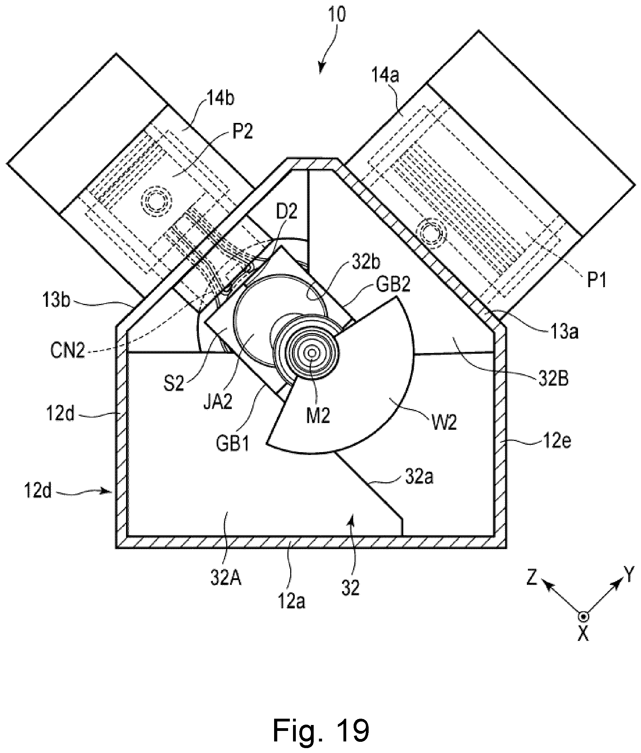

Fig. 16 is a perspective view showing a drive mechanism of a drive device according to a sixth embodiment. Fig. 17 is a perspective view showing the drive mechanism viewed from a different direction. Fig. 18 is a side view showing the drive device according to the sixth embodiment viewed from one side thereof, the case of the drive device being partially taken away. Fig. 19 is a side view showing the drive device according to the sixth embodiment viewed from the other side thereof, the case of the drive device being partially taken away. According to the sixth embodiment, the sliders having an annular shape are replaced with sliders S1 and S2 having a different shape, or specifically a rectangular shape in this case.

As shown in Figs. 17 and 18, the first slider S1 is formed of a rectangular plate and has a circular inner hole and four mutually orthogonal side surfaces. The circular inner hole receives the first journal portion JA1 of the second crankshaft CR2 fitted therein. Two of the four side surfaces, which are parallel and opposed to each other and extend linearly in the Y direction, constitute a pair of guide surfaces GA1 and GA2 of the first slider S1. According to this embodiment, the first slider S1 is dividable into two parts at the position of the dividing surface D1 extending in the Y direction. The dividing surface D1 is an irregular surface having irregularities arranged in the X direction. When two parts are assembled together with the dividing surfaces joined to each other, the two parts are prevented from shifting in the X direction. The first slider S1 is attached to the outer peripheral surface of the first journal portion JA1 via a bearing and is located in a plane orthogonal to the central axis of the first journal portion JA1. As shown in Fig. 18, the first slider S1 is located between the guide plates 30A and 30B of the first guide 30. The first slider S1 is sandwiched between the guide surfaces 30a and 30b. The guide surfaces GA1 and GA2 of the first slider S1 are in contact with the guide surfaces 30a and 30b, respectively. Thus, during the linear motion of the first slider S1 in the Y direction, the first slider S1 is guided in the Y direction by the guide surfaces 30a and 30b.

As shown in Figs. 16 and 19, the second slider S2 is formed of a rectangular plate. The second slider S2 has a circular inner hole and four mutually orthogonal side surfaces. The circular inner hole receives the second journal portion JA2 of the second crankshaft CR2 fitted therein. Two of the four side surfaces, which are parallel and opposed to each other and extend linearly in the Z direction, constitute a pair of guide surfaces GB1 and GB2 of the second slider S2. According to this embodiment, the second slider S2 is dividable into two parts at the position of the dividing surface D2 extending in the Z direction. The dividing surface D2 is an irregular surface having irregularities arranged in the X direction. When two parts are assembled together with the dividing surfaces joined to each other, the two parts are prevented from shifting in the X direction. The second slider S2 is attached to the outer peripheral surface of the second journal portion JA2 via a bearing and is located in a plane orthogonal to the central axis of the second journal portion JA2.

As shown in Fig. 19, the second slider S2 is located between the guide plates 32A and 32B of the second guide 32. The second slider S2 is sandwiched between the guide surfaces 32a and 32b. The guide surfaces GB1 and GB2 of the second slider S2 are in contact with the guide surfaces 32a and 32b, respectively. Thus, during the linear motion of the second slider S2 in the Z direction, the second slider S2 is guided in the Z direction by the guide surfaces 32a and 32b.

In the sixth embodiment described above, other components in the drive mechanism 20 are the same as those in the drive mechanism 20 according to the first embodiment described above. The sixth embodiment produces the same effects as the first embodiment. Furthermore, since the sliders are dividable, the sliders can be assembled more easily. The sliders can have any shapes other than a rectangle as long as they have two side surfaces (guide surfaces) parallel and opposed to each other.

The several embodiments described herein represent a number of possible examples and are not intended to limit the scope of the invention. The novel embodiments may have various other forms and are susceptible to omission, replacement, and modification of various elements thereof without departing from the spirit of the invention. The embodiments and variations thereof are included in the scope and purport of the invention and are also included in the inventions recited in the claims and equivalents thereof.

### LIST OF REFERENCE NUMBERS

- 10: drive device
- 12: case
- C1: first central axis
- C2: second central axis
- M1, M2: main shaft
- M3: eccentric shaft
- CR1: first crankshaft
- JA1: first journal portion
- JA2: second journal portion
- CR2: second crankshaft
- S1: first slider
- GA1, GA2: pair of guide surfaces
- S2: second slider
- GB1, GB2: pair of guide surfaces
- P1: first piston (first moving unit)
- CN1: connecting rod (first moving unit)
- P2: second piston (second moving unit)
- CN2: connecting rod (second moving unit)
- 30: first guide
- 30a: guide surface
- 32: second guide
- 32a: guide surface
- 14a: third guide, first cylinder
- 14b: fourth guide, second cylinder
- P1: first piston
- CN1: first connecting rod
- 22: through hole
- W1: first counterweight
- IW1: first internal counterweight
- W2: second counterweight
- IW2: second internal counterweight

## Claims

1. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a first guide (30) provided on the case (12) and configured to guide movement of the first slider (S1) along the first direction;
a second guide (32) provided on the case (12) and configured to guide movement of the second slider (S2) along a second direction, the second direction being orthogonal to the first central axis (C1) and orthogonal to the first direction; and
a third guide (14a) provided on the case (12) and configured to guide the linear motion of the first moving unit (P1, CN1) in the first direction.

2. The drive device (10) of claim 1,
wherein the second crankshaft (CR2) has a through hole (22) extending through the first journal portion (JA1) and the second journal portion (JA2), and the through hole (22) has a central axis aligned with the second central axis (C2), and
wherein the eccentric shaft (M3) of the first crankshaft (CR1) is rotatably inserted through the through hole (22).

3. The drive device (10) of claim 1, wherein the first crankshaft (CR1) includes a pair of main shafts (M1, M2) axially spaced apart from each other, a first counterweight (W1) provided between one of the main shafts (M1, M2) and one end of the eccentric shaft (M3), and a second counterweight (W2) provided between another of the main shafts (M1, M2) and another end of the eccentric shaft (M3).

4. The drive device (10) of claim 1, wherein the second crankshaft (CR2) includes a first internal counterweight (IW1) attached to the first journal portion (JA1), and a second internal counterweight (IW2) attached to the second journal portion (JA2).

5. The drive device (10) of claim 1, wherein the first guide (30) has a pair of first guide surfaces (30a, 30b) parallel and opposed to each other at an interval and each extending linearly in the first direction, and the first slider (S1) is located between the pair of first guide surfaces (30a, 30b) to be in contact with the pair of first guide surfaces (30a, 30b).

6. The drive device (10) of claim 5, wherein the second guide (32) has a pair of second guide surfaces (32a, 32b) parallel and opposed to each other at an interval and each extending linearly in the second direction, and the second slider (S2) is located between the pair of second guide surfaces (32a, 32b) to be in contact with the pair of second guide surfaces (32a, 32b).

7. The drive device (10) of claim 5, wherein the first slider (S1) has an annular shape coaxial with the first journal portion (JA1) and has an outer peripheral surface in contact with the pair of first guide surfaces (30a, 30b).

8. The drive device (10) of claim 5, wherein the first slider (S1) is formed of a plate having an inner hole and a pair of guide surfaces (GA1, GA2), the inner hole rotatably engages with the first journal portion (JA1), the pair of guide surfaces (GA1, GA2) are parallel and opposed to each other and each extend linearly, and the pair of guide surfaces (GA1, GA2) are in contact with the pair of first guide surfaces (30a, 30b) of the first guide (30).

9. The drive device (10) of claim 1,
wherein the third guide (14a) has a first cylinder (14a) provided on the case (12) and extending in the first direction, and
wherein the first moving unit (P1, CN1) includes a first piston (P1) and a first connecting rod (CN1), the first piston (P1) is provided in the first cylinder (14a) so as to be able to reciprocate in the first direction, and the first connecting rod (CN1) has one end connected to the first piston (P1) and another end rotatably connected to the first journal portion (JA1).

10. The drive device (10) of claim 9, further comprising:
a second moving unit (P2, CN2) rotatably connected to the second journal portion (JA2) and configured to perform linear motion in the second direction orthogonal to the first direction as the second journal portion (JA2) moves; and
a fourth guide (14b) provided on the case (12) and configured to guide the linear motion of the second moving unit (P2, CN2) in the second direction.

11. The drive device (10) of claim 10,
wherein the fourth guide (14b) has a second cylinder (14b) provided on the case (12) and extending in the second direction, and
wherein the second moving unit (P2, CN2) includes a second piston (P2) and a second connecting rod (CN2), the second piston (P2) is provided in the second cylinder (14b) so as to be able to reciprocate in the second direction, and the second connecting rod (CN2) has one end connected to the second piston (P2) and another end rotatably connected to the second journal portion (JA2).

12. The drive device (10) of claim 11, wherein the second piston (P2) has a different diameter than the first piston (P1).
